# EUROPEAN PATENT SPECIFICATION

(11) **EP 4 429 940 B1**
(45) Date of publication and mention of the grant of the patent: **05.08.2026**
(21) Application number: 22813627.1
(22) Date of filing: 04.11.2022
(51) Int. Cl.: B62M 27/02, B62J 43/16, B62J 43/28, B60L 50/64

(54) **AN ELECTRIC SNOWMOBILE COMPRISING AN ENCAPSULATING BODY THAT COVERS THE BATTERY PACKAGE**
ELEKTRISCHES SCHNEEMOBIL MIT EINEM VERKAPSELUNGSKÖRPER, DER DAS BATTERIEPACK ABDECKT
MOTONEIGE ÉLECTRIQUE COMPRENANT UN CORPS D'ENCAPSULATION QUI RECOUVRE LE BOÎTIER DE BATTERIE

(30) Priority: 08.11.2021 FI 20216149
(43) Date of publication of application: 18.09.2024
(73) Proprietor: Aurora Powertrains Oy, 96100 Rovaniemi (FI)
(72) Inventor: HAAVIKKO, Olli, 97220 Sinettä (FI); AUTIONIEMI, Matti, 96100 Rovaniemi (FI); NISKANEN, Jori-Jaakko, 96190 Rovaniemi (FI)
(74) Representative: Berggren Oy
(86) International application number: PCT/FI2022/050726
(87) International publication number: WO 2023/079214

(56) References cited:
- EP-A1- 1 798 081
- WO-A1-2020/083574
- WO-A2-2021/084520
- US-A- 3 692 130
- US-A1- 2016 167 743
- US-B1- 9 061 732
- DER MOTORSCHLITTEN ET AL: "Die Revolution der Betriebskosten beginnt, rein elektrisch", 1 January 2015 (2015-01-01), XP055499086, Retrieved from the Internet <URL:http://icatpro.com/wp-content/uploads/2015/11/icat-13-ze-web.pdf> [retrieved on 20180810]
- ANONYMOUS: "McGill University Electric Snowmobile Team - Snowmobile - Specifications", 1 January 2003 (2003-01-01), XP055499085, Retrieved from the Internet <URL:https://electricsnowmobile.mcgill.ca/English/specifications.htm> [retrieved on 20180810]

## Description

### Technical field

The present invention relates to snowmobiles and especially electrically driven snowmobiles. In more detail, the present invention relates to frame structures of the electrically driven snowmobiles.

### Background

A snowmobile is a vehicle for winter transport even in rural forest-dominating terrains and also for recreational activities when there is enough snow present for the vehicle. Traditionally snowmobiles have been using internal combustion engines as their power source, which makes sure that the travelling range is long enough even in rural and remote areas. This is also a safety matter.

Snowmobiles have a rather large rolling resistance, which correlates strongly to their relatively large consumption of power. Therefore, traditional snowmobiles with internal combustion engines have consumed rather large amount of fuel / 100 km. This becomes a safety issue in the wilderness, as there thus emerges a need for larger fuel tanks (or well-planned locations for re-fueling), which would further affect the drivability through excess weight on the vehicle. Thus, there has been some research to get rid of the power systems revolving around internal combustion engines; also because of the environmental reasons and trends.

Electrically driven snowmobiles have already been presented, e.g. in patent application publication FI 20175471, but the concept is pretty new and applied quite marginally currently in the snowmobile industry. However, the interest towards designing environmentally friendly and also quieter options for transport in the wilderness has been large, and in the future, these aspects most likely will become even more relevant for the customers and manufacturers.

The snowmobile is constructed around and within a specifically designed frame. Such a frame has many practical requirements, such as robustness, endurability against (almost continuous) shocks and impacts, and endurability also in winter conditions. Still, a certain lightness is good in order to have good maneuverability for the driver, and on the other hand, the location or height of the driver (i.e. the driver seat height) affects this as well, and also the centre of gravity is usually desired to be locating in a quite low position.

A prior art snowmobile from the early 2000's involves a profile-structured upper part of the frame, a so-called "pyramid structure", which also enables a stiffer solution compared to the earlier ones. The pyramid structure comprises a first A-shaped element giving support towards/from the front part of the frame, a second A-shaped element giving support towards/from the middle part of the frame, and a third A-shaped element giving support towards/from the rear part of the frame. The shock absorbers of the skis are attached from their upper ends to the lower part of the front-most A-shaped element. The impulse-typed forces hitting the skis and propagating towards and along the shock absorbers, will transfer via the front-most A-shaped element towards the top of the pyramid structure. From there, the forces will distribute via the central and rear A-shaped elements to the lower part of the frame.

As FI 20175471 discloses, the drive system of a new electric snowmobile or a converted electric snowmobile (from the one applying internal combustion engine) may comprise a primary driving axis, a gear mechanism, a drive axle, and an endless drive track rotating in contact with the snow below. The reference comprises an electric motor, which is placed within the frame, where the connection of the motor can be made via a connecting adapter. The connecting adapter comprises intrinsic flow channels designed for a cooling air or liquid, in order to direct excessive heat away from the electric motor.

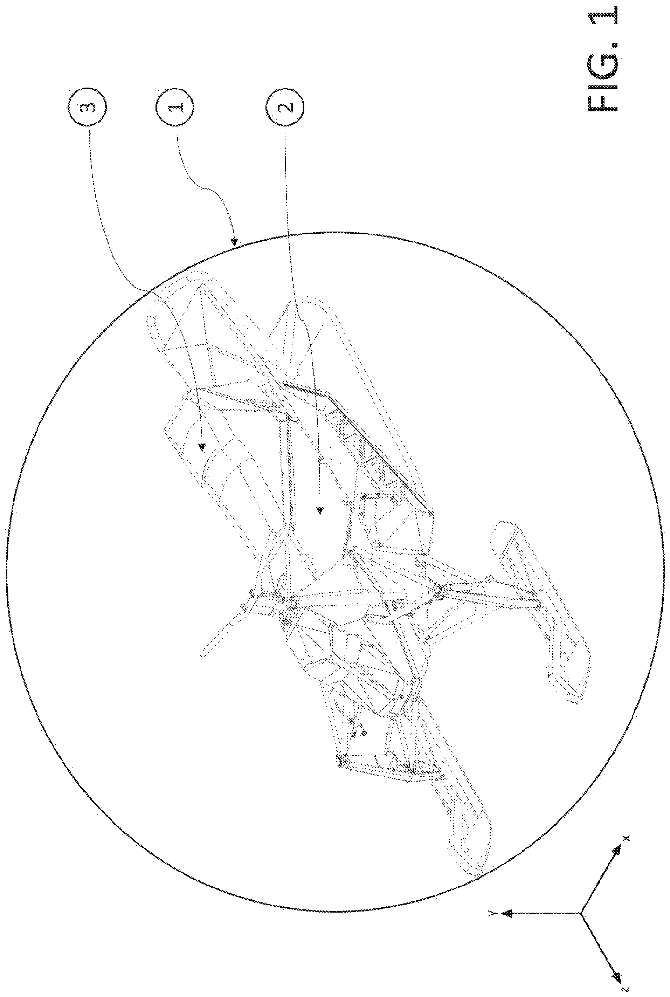

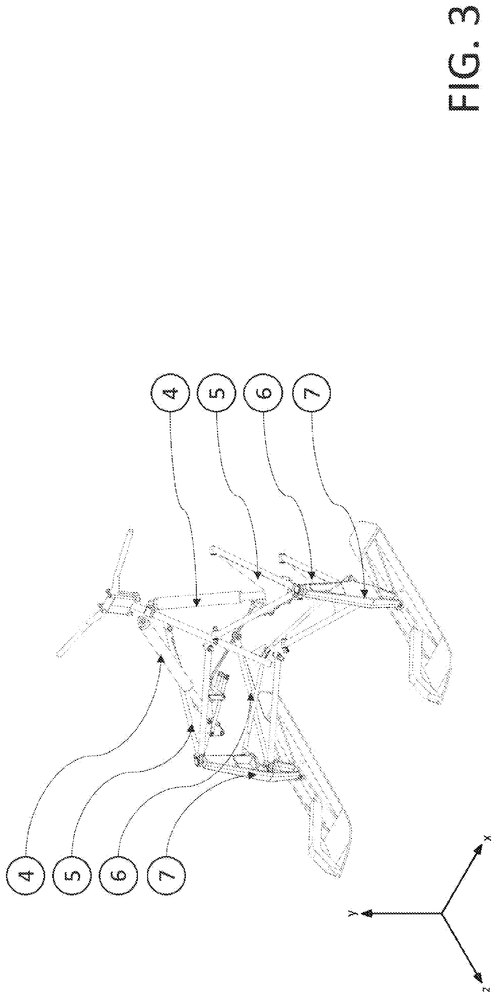

US 2006/0108164 ("Wubbolts") concerns a construction of a frame for snowmobiles or for other all-terrain vehicles (= ATV). Wubbolts presents a frame structure which enables the rider ("24") to sit closer to the centre of the snowmobile's longitudinal direction (see Fig. 3) and also closer to the motor (i.e. engine), in other words, more in front than the rider location on a prior art snowmobile (see Fig. 1). Wubbolts desires to create a design which could be used both in a snowmobile and in an ATV. Wubbolts provides an engine cradle where its wall thickness is about 2.0 mm. The frame includes a tunnel where the tunnel includes a separate left side structure of stamped sheet metal having unitary front and rear portions, and respectively, a separate right side structure of stamped sheet metal having front and rear portions. These two side structures form the tunnel over an endless track of the snowmobile. The engine is naturally supported by the frame. The engine cradle actually locates between the two side structures so that the front portions of the side structures are extending forward past the engine. As paragraphs [0059] and [0062] mention, Wubbolts applies an internal combustion engine. No electric motor has been introduced or discussed there anywhere.

The prior art has the problem that various frame design structures have been designed and optimized for internal combustion engine based snowmobiles only. Current solutions concerning the design and structural features thus have been created so that their physical limits and boundary conditions in general have been based on the elements and parts already required by the internal combustion engine based snowmobiles. These parts comprise various gas exchange systems (pipes and sound reduction arrangements, for instance), and the variable ratio transmission system, which are rather large in their size, and they thus create notable restrictions when planning the frame structure of the snowmobile. The lack of sound reduction enabling parts for input air, and the lack of exhaust pipings make it possible to redesign the front part of the snowmobile. Further, the lack of sound reduction enabling parts for exhaust gases and the lack of the variable ratio transmission system make it possible to create a narrow structure which resembles the feel of the motorbike driving experience. This would improve the ergonomic aspects of the driver during longer streaks of driving. Furthermore, it is beneficial to relocate the mass centre in a more optimized fashion; in this case more towards the driver and locating as low as it is physically possible.

Document WO 2021/084520 A2 discloses an electric snowmobile according to the preamble of claim 1.

Currently, there has not been presented an efficient and advantageous frame structure, which is especially suitable and designed for electric snowmobiles. This is the main problem in the prior art.

### Summary

The present invention introduces an electric snowmobile (1), wherein the electric snowmobile (1) comprises:
- a battery package (11);
- a frame (9); where the frame (9) comprises:
   - an encapsulating body (2), where at least a part of the encapsulating body (2) covers the battery package (11) on top of it and on top of its sides;
wherein
a front part of the frame (9) comprises:
   - two upper suspension A-arms (5); and
   - two lower suspension A-arms (6);
where the top ends of the upper and lower A-shapes are connected via a left and right spindle (7) to respective front skis of the electric snowmobile (1), and that
the encapsulating body (2) is manufactured from metal, or from a fiber-reinforced composite material, or from material capable to bear the forces directed towards the frame (9) and the encapsulating body (2), and wherein the frame (9) further comprises:
   - either of the low ends of the A-shapes are connected to two common connection points along the central longitudinal axis of the electric snowmobile (1) so that the lower suspension A-arms (6) have a first common connection point, and the upper suspension A-arms (5) have a second common connection point; and
   - the first and second common connection points locate fixed along a steering column connected directly to a handle bar of the electric snowmobile (1).

In an embodiment of the present invention, two front shock absorbers (4) are connected to a respective intermediate element, which in turn are connected to a respective upper suspension A-arm (5); and the frame (9) further comprises:
- the two front shock absorbers (4) are further attached to the steering column, above the first and second common connection points, the attachment point to the steering column locating also vertically higher than the two intermediate elements.

In an embodiment of the present invention, the electric snowmobile (1) further comprises:
- at least one vibration isolator (10) between the battery package (11) and the frame (9), for diminishing the effects of vibration onto the battery package (11).

In an embodiment of the present invention, the electric snowmobile (1) comprises three locations between the battery package (11) and the frame (9) where the vibration isolators (10) have been placed, for enabling twisting forces onto the frame (9) without creating twisting forces towards the battery package (11).

In an embodiment of the present invention, the electric snowmobile (1) further comprises:
- a driver's seat (3) right on top of the encapsulating body (2), where the driver's seat (3) has been constructed by fixing foamed plastic between leather of the driver's seat (3) and the encapsulating body (2) by appropriate connection tools.

In an embodiment of the present invention, the electric snowmobile (1) further comprises:
- the shape of the battery package (11) and the shape of the part of the encapsulating body (2) in its inner surface surrounding the battery package (11) are hexahedronal.

In an embodiment of the present invention, the electric snowmobile (1) further comprises:
- the battery package (11) being configured to be attached to the frame (9) by metal-comprising connecting wires or by other flexible connectors, such as a clamp assembly or fasteners, for ensuring a non-detachment of the battery package (11) in case the encapsulating body (2) is damaged during a crash of the electric snowmobile (1).

In an embodiment of the present invention, the electric snowmobile (1) further comprises:
- the material of the encapsulating body (2) is selected from aluminum, steel, stainless steel, or carbon fiber such that it acts as an electromagnetic interference, EMI, protection means for the electric snowmobile (1).

### Brief description of the drawings

Figure 1 illustrates an electric snowmobile with a multifunctional frame structure according to an embodiment of the present invention,
Figure 2 illustrates a front part of the frame of the multifunctional frame structure in more detail,
Figure 3 illustrates a front part of the frame of the multifunctional frame structure also in more detail, highlighting various elements of the front part,
Figure 4 illustrates the encapsulating body and vibration isolators in more detail, and
Figure 5 illustrates the role of the encapsulating body also as a protective cover structure for the battery package of the electric snowmobile.

### Detailed description

The present invention presents a multifunctional frame structure especially suitable for electric snowmobiles.

When concerning the electric power transmission within a vehicle, a main problem is the small available space i.e. volume. One of the largest physical parts is formed by a battery package, which leads to the fact that maximization of the energy density of the battery package (i.e. group of battery modules) is very desirable. Also the complete energy storage amount available in the whole battery package needs to be rather large, when applied in an electric snowmobile. FI 20215112 (still an unpublished patent application) presents a battery system for an electric snowmobile and it applies adjacent pouch cells, which can be installed in a hexahedron-shaped form when building the larger battery modules and finally, the battery package as an end result. Such a hexahedronal shape for the battery compartment (i.e. the battery package) gives certain boundary conditions when designing the frame around it. Thus, the battery package comprises a group of adjacently locating battery modules, which have been connected together for achieving a desired voltage and capacity.

One main characteristic and trend in this century for the snowmobiles is that created snowmobile designs have enabled the user, i.e. the driver, to sit on the snowmobile like on a motorbike. This is thus a more aerodynamical position for the driver, and it decreases the restrictive forces created by air resistance during driving. This "better-posture" feature was presented for the snowmobiles in the early 2000s. Such a design is now the prevailing solution across various different manufacturers of snowmobiles.

Next we discuss the main features and details of the present invention by referring to embodiments shown in Figures 1-5, and going through them one by one.

**Figure 1** illustrates an electric snowmobile 1 with a multifunctional frame structure according to an embodiment of the present invention. This drawing illustrates the vehicle as a whole, and in a rather general level.

The electric snowmobile 1 comprises an encapsulating body 2 which is a longitudinally placed element. The encapsulating body 2 may also be considered as a cover-like element protecting the electric elements and parts and also power transmission parts within the electric snowmobile 1. Furthermore, the encapsulating body 2 may be made from a metal sheet, which is shaped through folded and twisted parts so that the encapsulating body 2 forms a certain volumetric area meant for the battery package and for other elements such as power transmission elements and other electrical parts, e.g. connecting cablings. In an embodiment, not all the required elements need to locate within the volume defined by the encapsulating body 2, but for instance the battery package and the electric motor may locate within the volume defined by the outer surface of the encapsulating body 2. The encapsulating body 2 may be open from below so that the encapsulating body 2 comprises a "roof-part" and "side-walls-part", bent and formed from a planar metal sheet and possibly with connecting rods or protrusions, to form a structure which may be placed on top of the battery package. Simultaneously, the top surface of the encapsulating body 2 may form a platform, base or surface for the driver's seat 3 to be installed. The driver's seat 3 may comprise foamed plastic, set and attached between a top layer of leather and the top surface of the central part of the encapsulating body 2. Thus, the encapsulating body 2 forms a direct base for the seat 3 of the driver.

The encapsulating body 2 may be manufactured from metal, or from some hard but lighter material which has good endurance against impulse-type of forces and twisting forces, in an embodiment. In another possible embodiment, the encapsulating body 2 is manufactured from metal, or from a fiber-reinforced composite material, or from material capable to bear the forces directed towards the frame 9 and the encapsulating body 2. The encapsulating body 2 may be manufactured as a singular element, or from several separate parts which are attachable together in some way. The snowmobile 1 is prone to experience sudden and also possibly rather large forces, which usually have a force vector having mainly a vertical element, such as when the snowmobile 1 experiences a bump when riding onto an edge of the pothole on the terrain. However, the forces may also have a major horizontal component, when the snowmobile 1 hits a tilted edge of a pothole directing the snowmobile instantly more to left or to right, or when simply the driving action of the user makes a sharp turn for the snowmobile 1. In these varyingly directed external forces, the encapsulating body 2 needs to maintain all the internal elements such as the battery package well in its place, no matter the "quality" of the terrain where the driving takes place. Elastic elements or otherwise vibration-suppressing elements can be placed between the lower surface or the inner side surface of the encapsulating body 2 and the battery package right under or adjacent to it. Thus, the contact between the battery package and the inner surface of the encapsulating body 2 can be made sufficiently good and lasting, no matter the impulse-type of forces present during the driving. Also, any impulse experienced by the elastic or vibration suppressing elements will greatly be absorbed in these intermediate softening elements, reducing strain experienced on the outer walls and surfaces of the battery modules within the battery package.

Comparing to the prior art, the encapsulating body 2 now acts as a support structure which fully replaces the profile-structured pyramid solution with three A-shaped elements (as in prior art). The functions and characteristics enabled by the encapsulating body 2 fully replace the characteristics made possible by the pyramid-solution, and furthermore, the present invention provides an optimized solution for electrically driven snowmobiles, concerning volumetric consumption within the snowmobile's outer housing by different functional entities and structural features. Also in case of constant bumps and impulses experienced by the electric snowmobile 1 during normal driving, the invented structure involving the encapsulating body 2 is well suited to absorb and direct the forces so that the inner parts, such as the battery package 11, are not physically harmed, or e.g. electrically disconnected, during driving in the harsh conditions. The use of the encapsulating body 2 thus provides advantages over the profile-structured prior art solution.

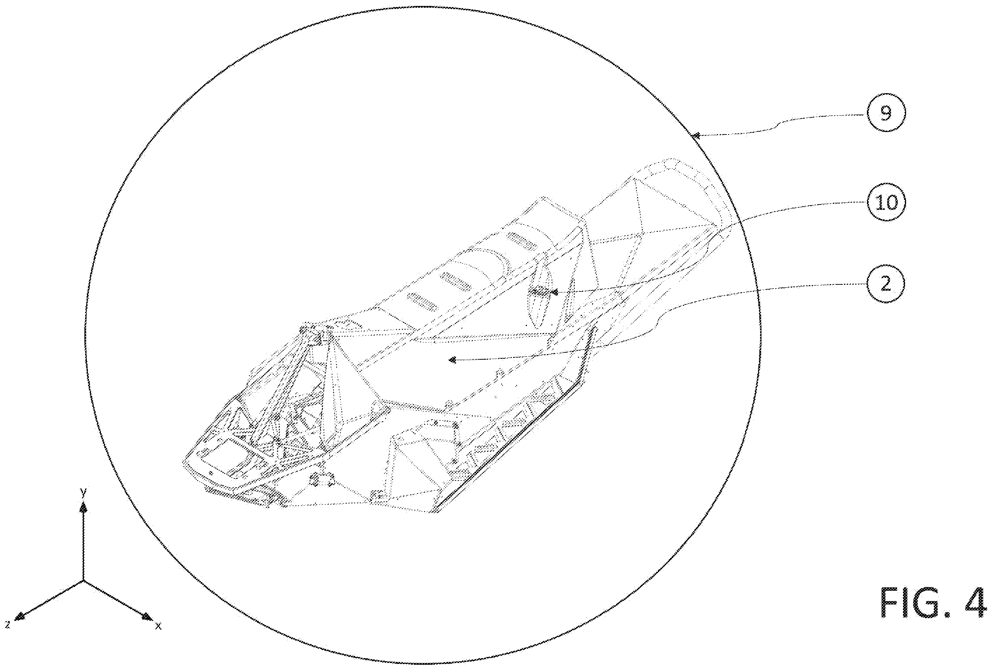

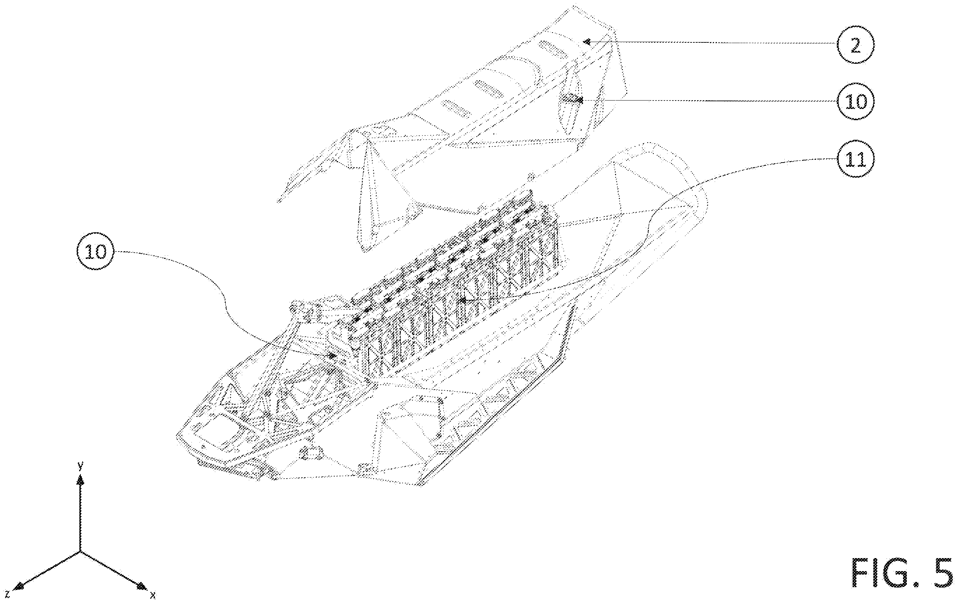

As an alternative or added functional element concerning shock reductions, there may be specific vibration isolators 10 between the battery package 11 and the frame 9 but these are discussed later in connection with Figures 4 and 5. There may be one or more (e.g. three) vibration isolators 10 installed in the snowmobile 1, for diminishing the effects of vibration onto the battery package 11. In case of three vibration isolators, the electric snowmobile 1 comprises three locations between the battery package 11 and the frame 9 where the vibration isolators 10 have been placed, for enabling twisting forces onto the frame 9 without creating twisting forces towards the battery package 11.

Below the encapsulating body 2, there is an endless drive track, which functions as "a driving mat" and as a direct interface between the vehicle itself and the snow surface on the terrain. The power from the electric motor is converted to a rotating movement of the endless drive track.

In the front side of the frame, there are two steerable front skis, which are connected to the front right and front left side of the frame structure. The steering given by the driver via the handle bar of the electric snowmobile transfers to the turning movement of the front skis.

As this is an electric snowmobile, there is no need for any internal combustion engine, or any other part which the internal combustion engine specifically requires. As a main advantage and as a major "green" result, there is no exhaust pipe and thus no harmful emissions to the environment, nor any loud motor sounds created by the internal combustion engine. These aspects make the driving experience very pleasant to the driver.

The rest of the elements, especially concerning the front part of the frame structure, are discussed in connection with the following Figures.

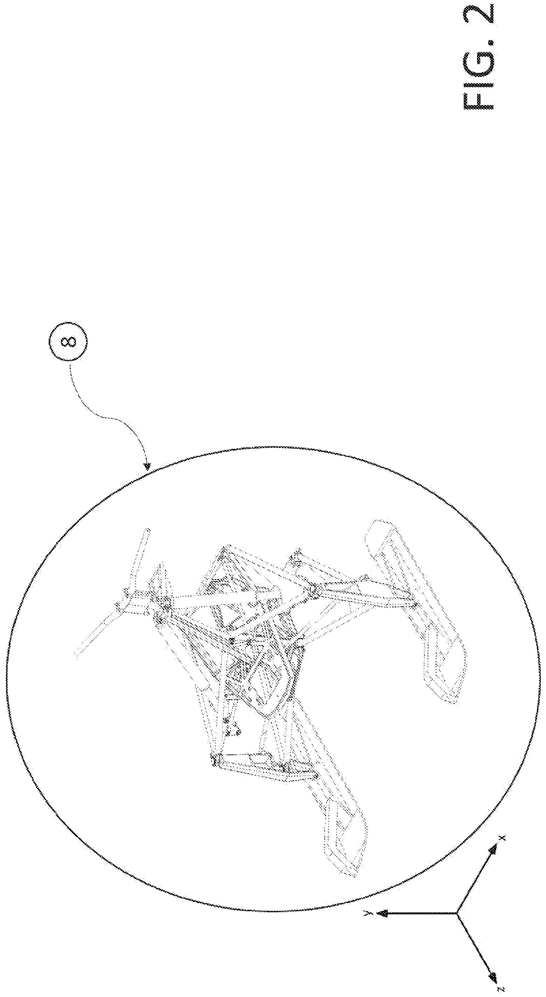

**Figure 2** illustrates a front part 8 of the frame in the multifunctional frame structure of the snowmobile in more detail.

Figure 2 shows a general structure of the front part 8 of the frame 9, as separated from the rest of the electric vehicle. Front skis make the contact to the snow, and the front skis are connected by mainly vertically aligned rods, i.e. by a left and right spindle to two A-shaped rod structures. Two front shock absorbers can be seen as the two thicker rod-shaped elements in a tilted alignment angle near the handle bar in the top of the device. The rest of the connecting rods and their mutual arrangement within the multifunctional frame structure are explained in connection with Figure 3.

**Figure 3** illustrates the front part of the frame in the multifunctional frame structure of the snowmobile also in more detail, but now highlighting various elements of the front part. Two front shock absorbers 4 can be seen as the two thicker rod-shaped elements in a tilted alignment angle near the handle bar in the top of the vehicle structure. Front skis are the lowermost elements making the contact to the snow, and the front skis are connected by mainly vertically aligned rods, i.e. by a left and right spindle 7 to two A-shaped rod structures (i.e. the lower and upper suspension A-arms 6, 5). The spindle 7 may also be called as a ski leg. The lower suspension A-arms 6 are placed substantially along a horizontal direction. The top point of the A-shape is connected to either the left or right spindle 7 (which locates substantially vertically, sticking up from either the left or right front ski). One branch of the lower left A-shaped element (i.e. half of the respective A-arm 6) is connected to one branch of the lower right A-shaped element (i.e. "mirroring" half of the respective A-arm 6), near the central longitudinal axis of the vehicle. The connection point can be seen in Fig. 3 as the low central connection point (i.e. a first common connection point), where five rods depart from nearly the same connection point. In an embodiment, there can be five rods connected together directly, or via shaped forms/elements in connection with rods, or via some intermediate connection elements or attachment tools (screws etc.) connecting the lower suspension A-arms 6 firmly to the rest of the frame.

In an embodiment, both branches (of the element 6) starting from the A-shaped top location within either on the left or right spindle 7, will connect to the outer surface of the encapsulating body 2 in the branch's outer end. This can be seen especially in Fig. 1. This connection makes the structure more robust and endurable.

The top ends of the left and right spindle 7 are where the upper suspension A-arms 5 are connected. The alignment of these A-shaped elements are principally the same as for the lower suspension A-arms 6. Thus, summarizing this structure, in the left hand side there are two A-shaped elements right on top of one another in a similar angular position, and the same applies for the right-hand side as well. Also the upper suspension A-arms 5 will connect together via one of their branches (see Fig. 3), in a second common connection point. Concerning this central axial line in a longitudinal direction of the vehicle, the mutual connection points (i.e. the first and second common connection points) of the lower and upper A-shaped elements 6, 5 will locate fixed along a steering column connected directly to the handle bar of the electric snowmobile 1.

There are two front shock absorbers 4 in an embodiment, which are connected to a respective intermediate element, which in turn are connected to a respective upper suspension A-arm 5. Furthermore, the two front shock absorbers 4 are further attached to the steering column, above the first and second common connection points, where the attachment point to the steering column locates also vertically higher than the two intermediate elements. This structure enables good shock absorption capabilities in case of impulse-like forces and shocks experienced by the electric snowmobile in a bumpy terrain.

The handle bar in the top of the vehicle thus experiences dampened impulses and mitigated shocks during the driving, and the vertical distance from the handle bar's level of the electric snowmobile to the level of the front skis will oscillate between certain limit values, based on experienced pits and potholes, and other hits created by the surrounding terrain during driving.

Controlling electric cablings or wirings are not visible in Figure 3.

The illustrated frame structure creates many advantages. It is light, and enables an aerodynamical solution for the frame's outer design. It is also robust and enduring during harsh outdoor environments, involving not only bumpy conditions, but also very cold conditions. There is good dampening characteristics for outside forces and impulses, making the driving more pleasurable for the driver. The design offers a driving position, which resembles a driving position made possible by current motorbikes. Also, the space which has been occupied by various parts required in the internal combustion engine - based snowmobiles, are now vacated in the electric snowmobile solution, and this free space is now well used in redesigning some shapes and alignment angles of the various rods of the frame structure. Therefore, it can be said that the presented design has been really optimized for the electric snowmobile, and maybe for the first time during the development history of electrically driven snowmobiles.

**Figure 4** illustrates the encapsulating body and vibration isolators of the electric snowmobile in more detail, in an embodiment of the present invention. A major part of the frame 9 is visible and shown from the point of view from the top left of the snowmobile structure. The longer element placed in a longitudinal direction which has a horizontally aligned part in the central area, is the encapsulating body 2, which is also visible partly in Figure 1. In this embodiment of the present invention, at least one vibration isolator 10 is placed between the battery package (not shown in Fig. 4) and the frame 9, for diminishing the effects of vibration onto the battery package. Furthermore, the electric snowmobile comprises three locations between the battery package and the frame 9 where the vibration isolators 10 have been placed, for enabling twisting forces onto the frame 9 without creating twisting forces towards the battery package. One exemplary location of a vibration isolator 10 is shown in Fig. 4.

Otherwise, concerning the front part of the frame 9, this embodiment may be implemented similarly as shown in Figures 1-3. The tail end part of the frame 9 can be designed as shown in Figure 4; this design is also visible in Figure 1. The illustrated shape however may be varied to some other beneficial shape if desired e.g. for aerodynamical reasons.

The encapsulating body 2 and the battery package 11 are more clearly shown in Figure 5, as an exploded view.

**Figure 5** illustrates the role of the encapsulating body 2 also as a protective cover structure for the battery package 11 of the electric snowmobile 1. The second role of the horizontal part of the encapsulating body 2 is to work as a base for the instalment of the driver's seat 3. A third role or purpose is to integrate the whole structure more together in a sense that outside impulses and forces directed towards the handle bar in the front, will also propagate along the longitudinal body 2, through the connection interface between the front part of the frame 8 and the encapsulating body 2. A fourth role or purpose is to protect also the driver and the vehicle itself so that all electric parts such as battery package 11 and wirings and the electric motor locate safely inside the volume determined by the surface contour of the encapsulating body 2. Thus, the shape of the encapsulating body 2 is designed so that snow won't enter the inner parts of the encapsulating body 2, e.g. into contact with the battery package 11 or any other electric parts during the driving. The inner parts are thus well protected, without added housings or other covering structures. In some embodiments, the encapsulating body 2 may act also as an EMI (= electromagnetic interference) shield; this feature is dependent on the selected material or materials (in case of multi-part, multi-material encapsulating body 2), and e.g. a metallic material selected for the encapsulating body 2 creates at least some shielding against interferences.

An optimal range of thickness for the material layer forming the encapsulating body 2 is 1-5 millimeters. This ensures proper rigidity and physical protection against outside hits and contacts, but also maintains the frame structure light enough.

Proper materials suitable for the encapsulating body 2 and for the various rods and also for the front shock absorbers 4 (concerning the solid parts forming the pipe-like parts) applied in the frame 9 comprise aluminium, steel, stainless steel, carbon fiber, and composite materials in general. Certain parts and elements may be manufactured from certain composite materials, if they are hard and durable enough for harsh outdoor use in winter conditions. With composite materials, the snowmobile 1 may be designed to weigh less, if this is desired for compensating the large weight created by the battery package 11.

The encapsulating body 2 may be formulated so that its front part reaches higher than its flat rear part. The shape of the front part of the encapsulating body 2 may resemble a pyramid-shape (we do not mean the "pyramid structure" as in the above prior art, i.e. the profile-structured snowmobile from the early 2000's), which will accommodate the A-shaped upper and lower support rods 5, 6, and the steering column and the front shock absorbers 4. Generally, the encapsulating body 2 can be said to comprise an elevated front section. One possible shape is shown in the Figures. In an alternative design option (see Fig. 1), the pyramid-shaped front part of the encapsulating body 2 will accommodate only a small part of the A-shaped support rods 5, 6 and the steering column; instead, the front shock absorbers 4 and most parts of the A-shaped support rods 5, 6 will locate outside of the front part of the encapsulating body 2, together with the left or right spindle 7, the handle bar and the front skis, as well. The handle bar is meant to be installed right through the highest location of the encapsulating body 2 (in the elevated front section, as Figure 1 also illustrates).

As Figure 5 illustrates, the encapsulating body 2 may comprise tilted side surfaces so that the driver's legs may be placed in a natural and comfortable fashion next to the tilted or vertical section of the encapsulating body 2.

Figure 5 shows two possible locations for the vibration isolators 10 between the battery package 11 and the encapsulating body 2, but these represent mere examples of various possible locations. As the frame 9 comprises the encapsulating body 2, the vibration isolators 10 are considered to locate also between the frame 9 and the battery package 11 (as described elsewhere in the description). These shown locations are right at the rear side of the battery package 11, and right in front of the battery package 11. One possible option is to place vibration isolators on top of four vertical side edges of the battery package 11. A fifth vibration isolator could maybe be placed along the bottom surface of the battery package 11. The top surface of the battery package 11 comprises connectors and various technical parts, such as cooling pipes, and possibly terminal strips sticking up from the battery package 11. However, on top of slightly ovally shaped connectors which themselves connect adjacent modules together along the top surface of the battery modules, there can be a sixth vibration isolator 10 which may locate right under the top flat surface in the central part of the encapsulating body 2. The structure is desired to be rigid and the parts should not move or hit towards one another within the snowmobile 1.

One option is to place an elastic layer or an elastic element between the inner surface of the encapsulating body 2 and the battery package 11. In the group of embodiments, the elastic part/element or elastic/flexible characteristic may be present along one - six outer surfaces of the hexahedronal battery package 11.

In the embodiment shown in Fig. 5, the battery modules are packed here in a single longitudinal row, with six modules in this single row. With known physical dimensions of a single battery module, the number of rows, columns, and even layers of modules can be selected in order to fit them within the battery space defined by the encapsulating body 2. Thus, six battery modules represent just a single embodiment among all possible embodiments suitable for a snowmobile use.

The battery package 11 may be fixed in its place to the frame 9, by separate cablings, or wirings, or strips of elastic band, or connectors, or by similar attachment means. In other words, the battery package 11 is configured to be attached to the frame 9 by metal-comprising connecting wires or by other flexible connectors, such as a clamp assembly or fasteners, for ensuring a non-detachment of the battery package 11 in case the encapsulating body 2 is damaged during a crash of the electric snowmobile 1.

The top surface of the central horizontal planar area of the encapsulating body 2 may be provided with the driver's seat 3, without any intermediate base or added element. In other words, the driver's seat 3 comprising e.g. foamed plastic and top leather layer may be directly installed and fixed on top of the central horizontal part of the encapsulating body 2. In other words, a driver's seat 3 locates right on top of the encapsulating body 2, where the driver's seat 3 has been constructed by fixing foamed plastic between leather of the driver's seat 3 and the encapsulating body 2 by appropriate connection tools.

Summarizing the main concept of the present invention, it introduces an electric snowmobile 1, wherein the electric snowmobile 1 comprises a battery package 11; a frame 9; where the frame 9 comprises an encapsulating body 2, where at least a part of the encapsulating body 2 covers the battery package 11 on top of it and on top of its sides; wherein a front part of the frame 9 comprises two upper suspension A-arms 5; and two lower suspension A-arms 6; where the top ends of the upper and lower A-shapes are connected via a left and right spindle 7 to respective front skis of the electric snowmobile 1, and that the encapsulating body 2 is manufactured from metal, or from a fiber-reinforced composite material, or from material capable to bear the forces directed towards the frame 9 and the encapsulating body 2, and wherein the frame 9 further comprises either of the low ends of the A-shapes are connected to two common connection points along the central longitudinal axis of the electric snowmobile 1 so that the lower suspension A-arms 6 have a first common connection point, and the upper suspension A-arms 5 have a second common connection point; and the first and second common connection points locate fixed along a steering column connected directly to a handle bar of the electric snowmobile 1.

In an embodiment, concerning front shock absorbers 4 shown e.g. in Figures 1-3, the two front shock absorbers 4 are further attached to the steering column, above the first and second common connection points, the attachment point to the steering column locating also vertically higher than the two intermediate elements (which locate in the lower ends of the front shock absorbers 4).

In an embodiment, the shape of the battery package 11 and the shape of the part of the encapsulating body 2 in its inner surface surrounding the battery package 11 are hexahedronal. Many dimensional ratios are possible within this hexahedron, and the illustrated embodiment of six battery modules in a single row is merely one possible example.

In an embodiment, the electric snowmobile 1 is further constructed so that the battery package 11 is configured to be attached to the frame 9 by metal-comprising connecting wires or by other flexible connectors, such as a clamp assembly or fasteners, for ensuring a non-detachment of the battery package 11 in case the encapsulating body 2 is damaged during a crash of the electric snowmobile 1.

In an embodiment, the electric snowmobile 1 is further constructed so that the material of the encapsulating body 2 is selected from aluminum, steel, stainless steel, or carbon fiber such that it acts as an electromagnetic interference, EMI, protection means for the electric snowmobile 1.

The present invention differs from the profile-structured prior art snowmobile in various ways. The prior art solution has three A-shaped support structures installed so that all A-shapes are topped at the highest position of the frame (i.e. the pyramid's top spot). However, the present invention comprises four A-shaped elements, and front shock absorbers enabling the vertical distance between the handle bar's level and the ski's level to shorten to a certain extent during a hit by the terrain, and further, the encapsulating body in order to create a completely new kind of frame structure. This is a multifunctional structure as discussed above. The A-shapes used in the present invention are placed and aligned so that their "top locations" (i.e. the point where two rods diverge) are placed on top of the central part of both front skis. This distributes the forces experienced by the front skis so that a big part of the forces will distribute along different surface locations of the encapsulating body 2, and a part of the forces will dampen because of the front shock absorbers acting as a mitigating element for the incoming physical impulses. The presented structure makes the electric snowmobile more robust and more enduring during various effects originating from the outside world (i.e. environmental and snow-related), and also resistant against twists, turns and shocks.

The present invention may vary within the scope of the claims.

## Claims

1. An electric snowmobile (1), wherein the electric snowmobile (1) comprises:
- a battery package (11);
- a frame (9); where the frame (9) comprises:
- an encapsulating body (2), where at least a part of the encapsulating body (2) covers the battery package (11) on top of it and on top of its sides;
wherein
a front part of the frame (9) comprises:
- two upper suspension A-arms (5); and
- two lower suspension A-arms (6);
wherein the top ends of the upper and lower A-shapes are connected via a left and right spindle (7) to respective front skis of the electric snowmobile (1), and wherein
the encapsulating body (2) is manufactured from metal, or from a fiber-reinforced composite material, or from material capable to bear the forces directed towards the frame (9) and the encapsulating body (2); **characterized in that**
the frame (9) further comprises:
- either of the low ends of the A-shapes are connected to two common connection points along the central longitudinal axis of the electric snowmobile (1) so that the lower suspension A-arms (6) have a first common connection point, and the upper suspension A-arms (5) have a second common connection point; and
- the first and second common connection points locate fixed along a steering column connected directly to a handle bar of the electric snowmobile (1).

2. The electric snowmobile according to claim 1, **characterized in that** two front shock absorbers (4) are connected to a respective intermediate element, which in turn are connected to a respective upper suspension A-arm (5); and the frame (9) further comprises:
- the two front shock absorbers (4) are further attached to the steering column, above the first and second common connection points, the attachment point to the steering column locating also vertically higher than the two intermediate elements.

3. The electric snowmobile according to claim 1, **characterized in that** the electric snowmobile (1) further comprises:
- at least one vibration isolator (10) between the battery package (11) and the frame (9), for diminishing the effects of vibration onto the battery package (11).

4. The electric snowmobile according to claim 3, **characterized in that** the electric snowmobile (1) comprises three locations between the battery package (11) and the frame (9) where the vibration isolators (10) have been placed, for enabling twisting forces onto the frame (9) without creating twisting forces towards the battery package (11).

5. The electric snowmobile according to any of claims 1-4, **characterized in that** the electric snowmobile (1) further comprises:
- a driver's seat (3) right on top of the encapsulating body (2), where the driver's seat (3) has been constructed by fixing foamed plastic between leather of the driver's seat (3) and the encapsulating body (2) by appropriate connection tools.

6. The electric snowmobile according to any of claims 1-5, **characterized in that** the electric snowmobile (1) further comprises:
- the shape of the battery package (11) and the shape of the part of the encapsulating body (2) in its inner surface surrounding the battery package (11) are hexahedronal.

7. The electric snowmobile according to any of claims 1-6, **characterized in that** the electric snowmobile (1) further comprises:
- the battery package (11) being configured to be attached to the frame (9) by metal-comprising connecting wires or by other flexible connectors, such as a clamp assembly or fasteners, for ensuring a non-detachment of the battery package (11) in case the encapsulating body (2) is damaged during a crash of the electric snowmobile (1).

8. The electric snowmobile according to any of claims 1-7, **characterized in that** the electric snowmobile (1) further comprises:
- the material of the encapsulating body (2) is selected from aluminum, steel, stainless steel, or carbon fiber such that it acts as an electromagnetic interference, EMI, protection means for the electric snowmobile (1).

## Patentansprüche

1. Elektrischer Motorschlitten (1), wobei der elektrische Motorschlitten (1) Folgendes umfasst:
- ein Batteriepaket (11);
- einen Rahmen (9); wobei der Rahmen (9) Folgendes umfasst:
- einen Einkapselungskörper (2), wobei mindestens ein Teil des Einkapselungskörpers (2) die Batteriepackung (11) auf der Oberseite und auf der Oberseite ihrer Seiten abdeckt;
wobei
ein vorderer Teil des Rahmens (9) Folgendes umfasst:
- zwei obere Aufhängungslenker (5); und
- zwei untere Aufhängungslenker (6);
wobei
die oberen Enden der oberen und unteren A-Formen über eine linke und rechte Spindel (7) mit den jeweiligen vorderen Skiern des elektrischen Motorschlittens (1) verbunden sind, und wobei der Einkapselungskörper (2) aus Metall oder aus einem faserverstärkten Verbundwerkstoff oder aus einem Material hergestellt ist, das in der Lage ist, die auf den Rahmen (9) und den Einkapselungskörper (2) gerichteten Kräfte aufzunehmen; **dadurch gekennzeichnet, dass** der Rahmen (9) ferner Folgendes umfasst:
- jedes der unteren Enden der A-Formen mit zwei gemeinsamen Verbindungspunkten entlang der Mittellängsachse des elektrischen Schneemobils (1) verbunden ist, sodass die unteren Aufhängungslenker (6) einen ersten gemeinsamen Verbindungspunkt aufweisen, und die oberen Aufhängungslenker (5) einen zweiten gemeinsamen Verbindungspunkt aufweisen; und
- der erste und der zweite gemeinsame Verbindungspunkt sind entlang einer Lenksäule befestigt, die direkt mit einer Lenkstange des elektrischen Motorschlittens (1) verbunden ist.

2. Elektrisches Schneemobil nach Anspruch 1, **dadurch gekennzeichnet, dass** zwei vordere Stoßdämpfer (4) mit einem jeweiligen Zwischenelement verbunden sind, das wiederum mit einem jeweiligen oberen Aufhängungslenker (5) verbunden ist; und dass der Rahmen (9) ferner Folgendes umfasst:
- die beiden vorderen Stoßdämpfer (4) sind oberhalb des ersten und zweiten gemeinsamen Verbindungspunktes an der Lenksäule befestigt, wobei der Befestigungspunkt an der Lenksäule auch vertikal höher als die beiden Zwischenelemente liegt.

3. Elektrisches Schneemobil nach Anspruch 1, **dadurch gekennzeichnet, dass** das elektrische Schneemobil (1) ferner Folgendes umfasst:
- mindestens einen Schwingungsisolator (10) zwischen dem Batteriepaket (11) und dem Rahmen (9), um die Auswirkungen von Schwingungen auf das Batteriepaket (11) zu vermindern.

4. Elektrischer Motorschlitten nach Anspruch 3, **dadurch gekennzeichnet, dass** der elektrische Motorschlitten (1) drei Stellen zwischen dem Batteriepaket (11) und dem Rahmen (9) aufweist, an denen die Schwingungsisolatoren (10) angeordnet sind, um Verwindungskräfte auf den Rahmen (9) zu ermöglichen, ohne Verwindungskräfte in Richtung des Batteriepakets (11) zu erzeugen.

5. Elektrischer Motorschlitten nach einem der Ansprüche 1 bis 4, **dadurch gekennzeichnet, dass** das elektrische Schneemobil (1) ferner Folgendes umfasst:
- einen Fahrersitz (3) direkt auf dem Einkapselungskörper (2), wobei der Fahrersitz (3) durch Fixierung von Schaumstoff zwischen dem Leder des Fahrersitzes (3) und dem Einkapselungskörper (2) mit geeigneten Verbindungswerkzeugen hergestellt wurde.

6. Elektrischer Motorschlitten nach einem der Ansprüche 1 bis 5, **dadurch gekennzeichnet, dass** das elektrische Schneemobil (1) ferner Folgendes umfasst:
- die Form des Batteriepakets (11) und die Form des Teils des Einkapselungskörpers (2) an seiner inneren Oberfläche, der das Batteriepaket (11) umgibt, sind hexaedrisch.

7. Elektrischer Motorschlitten nach einem der Ansprüche 1 bis 6, **dadurch gekennzeichnet, dass** das elektrische Schneemobil (1) ferner Folgendes umfasst:
- das Batteriepaket (11), das konfiguriert ist, um an dem Rahmen (9) durch metallumfassende Verbindungsdrähte oder durch andere flexible Verbinder, wie beispielsweise eine Klemmenbaugruppe oder Befestigungselemente, befestigt zu werden, um eine Nichtablösung des Batteriepakets (11) sicherzustellen, falls der Einkapselungskörper (2) während eines Unfalls des elektrischen Schneemobils (1) beschädigt wird.

8. Elektrischer Motorschlitten nach einem der Ansprüche 1 bis 7, **dadurch gekennzeichnet, dass** das elektrische Schneemobil (1) ferner Folgendes umfasst:
- das Material des Kapselkörpers (2) wird aus Aluminium, Stahl, rostfreiem Stahl oder Kohlefaser ausgewählt, sodass es als Mittel zum Schutz vor elektromagnetischen Störungen (EMI) für das elektrische Schneemobil (1) dient.

## Revendications

1. Motoneige électrique (1), dans laquelle la motoneige électrique (1) comprend :
- un bloc-batterie (11) ;
- un cadre (9) ; où le cadre (9) comprend :
- un corps d'encapsulation (2), où au moins une partie du corps d'encapsulation (2) recouvre le bloc-batterie (11) sur le dessus de celui-ci et sur le dessus de ses côtés ;
dans laquelle une partie avant du cadre (9) comprend :
- deux bras en A de suspension supérieurs (5) ; et
- deux bras en A de suspension inférieurs (6) ;
dans laquelle les extrémités supérieures des formes en A supérieures et inférieures sont reliées par l'intermédiaire d'une fusée gauche et droite (7) aux skis avant respectifs de la motoneige électrique (1), et dans laquelle le corps d'encapsulation (2) est fabriqué en métal, ou en un matériau composite renforcé par des fibres, ou en un matériau capable de supporter les forces dirigées vers le cadre (9) et le corps d'encapsulation (2) ; **caractérisée en ce que** le cadre (9) comprend en outre :
- l'une ou l'autre des extrémités inférieures des formes en A sont reliées à deux points de connexion communs le long de l'axe longitudinal central de la motoneige électrique (1) de sorte que les bras en A de suspension inférieurs (6) ont un premier point de connexion commun, et les bras en A de suspension supérieurs (5) ont un second point de connexion commun ; et
- les premier et second points de connexion communs sont fixes le long d'une colonne de direction connectée directement à un guidon de la motoneige électrique (1).

2. Motoneige électrique selon la revendication 1, **caractérisée en ce que** deux amortisseurs avant (4) sont connectés à un élément intermédiaire respectif, qui à son tour est connecté à un bras en A de suspension supérieur respectif (5) ; et le cadre (9) comprend en outre :
- les deux amortisseurs avant (4) sont en outre fixés à la colonne de direction, au-dessus des premier et second points de connexion communs, le point de fixation à la colonne de direction se situant également verticalement plus haut que les deux éléments intermédiaires.

3. Motoneige électrique selon la revendication 1, **caractérisée en ce que** la motoneige électrique (1) comprend en outre :
- au moins un isolateur de vibrations (10) entre le bloc-batterie (11) et le cadre (9), pour diminuer les effets des vibrations sur le bloc-batterie (11).

4. Motoneige électrique selon la revendication 3, **caractérisée en ce que** la motoneige électrique (1) comprend trois emplacements entre le bloc-batterie (11) et le cadre (9) où les isolateurs de vibrations (10) ont été placés, pour permettre des forces de torsion sur le cadre (9) sans créer de forces de torsion vers le bloc-batterie (11).

5. Motoneige électrique selon l'une quelconque des revendications 1 à 4, **caractérisée en ce que** la motoneige électrique (1) comprend en outre :
- un siège du conducteur (3) juste au-dessus du corps d'encapsulation (2), où le siège du conducteur (3) a été construit en fixant de la mousse plastique entre le cuir du siège du conducteur (3) et le corps d'encapsulation (2) par des outils de connexion appropriés.

6. Motoneige électrique selon l'une quelconque des revendications 1 à 5, **caractérisée en ce que** la motoneige électrique (1) comprend en outre :
- la forme du bloc-batterie (11) et la forme de la partie du corps d'encapsulation (2) dans sa surface intérieure entourant le bloc-batterie (11) sont hexaédriques.

7. Motoneige électrique selon l'une quelconque des revendications 1 à 6, **caractérisée en ce que** la motoneige électrique (1) comprend en outre :
- le bloc-batterie (11) étant configuré pour être fixé au cadre (9) par des fils de connexion comprenant du métal ou par d'autres connecteurs flexibles, tels qu'un ensemble de serrage ou des attaches, pour assurer un non-détachement du bloc-batterie (11) dans le cas où le corps d'encapsulation (2) est endommagé lors d'un accident de la motoneige électrique (1).

8. Motoneige électrique selon l'une quelconque des revendications 1 à 7, **caractérisée en ce que** la motoneige électrique (1) comprend en outre :
- le matériau du corps d'encapsulation (2) est sélectionné parmi l'aluminium, l'acier, l'acier inoxydable ou la fibre de carbone de sorte qu'il agit comme un moyen de protection contre les interférences électromagnétiques (EMI) pour la motoneige électrique (1).
